# EUROPEAN PATENT APPLICATION

(11) **EP 2 362 528 A2**
(43) Date of publication of application: **31.08.2011**
(21) Application number: 11155817.7
(22) Date of filing: 24.02.2011
(51) Int. Cl.: H02K 29/08, H02K 11/00

(54) **Electic motor with storage device storing rotor position errors.**

(30) Priority: 26.02.2010 JP 2010042768; 25.01.2011 JP 2011012983
(71) Applicant: SANYO ELECTRIC CO. LTD, Moriguchi-City, Osaka 570 (JP)
(72) Inventor: Maeda, Yoshihiko, Moriguchi City Osaka 570-8677 (JP); Takao, Hiroshi, Moriguchi City Osaka 570-8677 (JP)
(74) Representative: Glawe, Delfs, Moll

(57) **Abstract**

A motor of the present invention is provided with a storage portion, and information stored in the storage portion can be output to the outside.

## Description

### BACKGROUND OF THE INVENTION

### 1. Field of the Invention

The present invention relates to a motor provided with a position detection element that is needed to control the operation of the motor and that detects the position of a rotor and a moving unit that includes an electrically driven vehicle incorporating such a motor. The present invention also relates to a method of storing error information on a position where the rotor position detection element is attached. In the description of the present invention, "information indicating an error" is often expressed as "error information."

### 2. Description of Related Art

Conventionally, automobiles and motorcycles have generally used, as a driving source, an engine that acquires a driving force with a fuel such as gasoline or light oil. However, nowadays, in order to facilitate environmental protection, attention is focused on the development of electrically driven vehicles that use, as a driving source, a motor which acquires a driving force by using electric power as energy.

A motor includes: for example, a rotor which has a magnet and rotates about a rotation shaft; and a stator core which has a coil and in which the rotor is provided inwardly in a radial direction. By the action of a magnetic force produced by the magnet of the rotor and a magnetic force produced by the coil portion of the stator core, they repeatedly repel and attract each other and thus the rotor rotates.

In order to efficiently rotate the rotor, it is necessary to accurately find the rotation angle of the rotor. Hence, the motor may be provided with a position detection element for detecting the position of the magnet included in the rotor. As the position detection element, a Hall element is generally and widely used; that is disclosed as a conventional technology.

In a conventional motor, a rotor position detection element is often mounted on a circuit board. When the position detection element is mounted on the circuit board, when the circuit board is attached to the motor or when a peripheral member such as a rotor or a rotor magnet is assembled, the position detection element may be mechanically displaced. This may cause variations in the accuracy of detection by the position detection element. There is a concern that, if the motor is rotated without the variations being corrected, a predetermined rotational performance will not be able to be obtained, the efficiency of the rotation will be reduced or the motor will become out of control.

It is possible to electrically measure a displacement between a predetermined position of the position detection element, relative to a rotor, where the rotor rotation position can be properly detected and the actual position where the position detection element is attached. Thus, it is possible to properly rotate the motor by storing a correction value for the displacement in a control device outside the motor, such as an inverter circuit. However, when information indicating an error (hereinafter referred to as "error information") of the position where the position detection element of the motor is attached is stored in the control device outside the motor, each time the combination of the motor and the control device is cancelled such as by replacement of the motor or the control device, it is necessary to newly store error information on the position of the attachment. Consequently, the efficiency of the production of, for example, an electrically driven vehicle incorporating the motor or the efficiency of assembly necessary for repair thereof may be significantly reduced.

### SUMMARY OF THE INVENTION

The present invention is made in view of the foregoing. An object of the present invention is to provide: a motor which prevents the inconvenience of newly storing inherent motor information such as error information on the position where a position detection element of the motor is attached even when the combination of the motor and its control device is cancelled such as by replacement of the motor or the control device and which thus increases the efficiency of assembly of an electrically driven vehicle incorporating the motor; and a moving unit including the electrically driven vehicle incorporating the motor. Another object of the present invention is to provide a method of storing the error information on the position where the rotor position detection element is attached.

To achieve the objects, a motor according to the present invention includes a storage portion, in which information stored in the storage portion can be output to an outside.

It is therefore possible to store inherent motor information in the storage portion of the motor. The inherent motor information is output to the outside of the motor, and it can be used to control the motor.

The "inherent motor information" described above is not limited to the error information on the position where the position detection element of the motor is attached. The inherent motor information may be information that shows the type, the type number, the model number, the lot number or the serial number of the motor. The "storage portion" described above preferably includes a requisite minimum number of elements that control the storage; other elements or the like that read information from such elements may or may not be included.

To achieve the objects, a motor according to the present invention includes: a rotor; a position detection element that is attached to detect the position of the rotor; and the storage portion that stores information indicating an error of a position where the position detection element is attached.

The rotor rotates about a rotation shaft, and the position of the rotor is a position (rotational position) of the rotating rotor in the direction of rotation of the rotor. The position detection element is attached such that it is arranged at a predetermined position, relative to the rotor, where the rotation position of the rotor can be properly detected; however, it is likely that an error occurs between the predetermined position and the actual position where the position detection element is attached. Hence, the error information on the position where the position detection element is attached indicates the size and direction of the error; with this information, it is possible to properly correct the results of detection of the rotation position of the rotor. The "predetermined position, relative to the rotor, where the rotation position of the rotor can be properly detected" means a preset position in which the position detection element is attached and in which a desirable detection sensitivity reflecting the peak of a magnetic pole, the delay of a detection signal and the like is obtained.

The motor configured as described above includes a position detection board on which the position detection element is provided. In the motor, the storage portion is provided on the position detection board.

In the motor configured as described above, the storage portion is formed with a storage element.

In the motor configured as described above, in the storage portion, a series circuit composed of two resistors is connected to a power supply and one of the two resistors is a variable resistor, and the storage portion outputs a voltage between the two resistors as a signal for the information.

In the motor configured as described above, in the storage portion, a plurality of series circuits composed of resistors and jumper wires that can be cut are connected in parallel with respect to a power supply, and the storage portion outputs each of voltages between the resistors and the jumper wires as a signal for the information.

In the motor configured as described above, in the storage portion, a plurality of series circuits composed of sub-resistors and jumper wires that can be cut are connected in parallel with respect to a main resistor connected to a power supply, and the storage portion outputs a voltage of the main resistor on the side of the sub-resistors as a signal for the information.

In the motor configured as described above, in the storage portion, a plurality of series circuits composed of resistors and jumper wires that can be cut are connected in parallel with respect to an electrical wire different from an electrical wire for supplying electric power to the position detection element, and the storage portion outputs a voltage of the series circuits on the side of a power supply as a signal for the information.

In the present invention, a moving unit including an electrically driven vehicle is provided with the motor described above.

The "moving unit" described above naturally includes electrically driven vehicles such as a motorcycle, a three-wheeled vehicle and a four-wheeled vehicle, and further includes vehicles such as a ship, play equipment on the water and a moving unit that uses a driving source as a motor and that moves with no humans on it.

The moving unit configured as described above and including an electrically driven vehicle includes: the motor; a control device that controls the motor based on error information, obtained from the storage portion of the motor, on a position where the position detection element is attached; and a battery that supplies electric power to the motor and the control device.

According to the present invention, there is provided a method of storing error information on a position where a rotor position detection element is attached. The method includes: fixing, to a motor, a position detection element that detects a position of a rotor; measuring, by rotating the motor, an error of a position where the position detection element is attached; and storing, in a storage portion included in the motor, information indicating the error of the position where the position detection element is attached.

### BRIEF DESCRIPTION OF THE DRAWINGS

Fig. 1 is a right side view showing an example of an electrically driven vehicle that is a moving unit incorporating a motor according to a first embodiment of the present invention;
Fig. 2 is a front vertical cross-sectional view of a rear wheel of the electrically driven vehicle shown in Fig. 1;
Fig. 3 is a perspective view of the vicinity of the motor shown in Fig. 2;
Fig. 4 is a partially exploded perspective view showing elements in the vicinity of the motor shown in Fig. 3;
Fig. 5 is a right side view of the motor shown in Fig. 2;
Fig. 6 is a front vertical cross-sectional view of a molded resin of the motor shown in Fig. 5;
Fig. 7 is a left side view of the motor shown in Fig. 5 that shows a state where a stator core is incorporated in a motor case;
Fig. 8 is a perspective view of a rotor of the motor shown in Fig. 5;
Fig. 9 is a perspective view of an outside case of the motor shown in Fig. 5;
Fig. 10 is a top horizontal cross-sectional view of the motor and a brake mechanism shown in Fig. 5;
Fig. 11 is a schematic diagram showing the configuration of the motor and a control device;
Fig. 12 is a perspective view of a position detection board of the motor shown in Fig. 10;
Fig. 13 is a perspective view illustrating the attachment of the position detection board shown in Fig. 12;
Fig. 14 is a perspective view showing the arrangement of the position detection board shown in Fig. 12;
Fig. 15 is a circuit diagram of the position detection board shown in Fig. 12;
Fig. 16 is a circuit diagram of the position detection board of a motor according to a second embodiment of the present invention;
Fig. 17 is a circuit diagram of the position detection board of a motor according to a third embodiment of the present invention;
Fig. 18 is a circuit diagram of the position detection board of a motor according to a fourth embodiment of the present invention;
Fig. 19 is a circuit diagram of the position detection board of a motor according to a fifth embodiment of the present invention;
Fig. 20 is a table showing a relationship between the amount of angular displacement in the position detection board shown in Fig. 19 and the setting of jumper wires;
Fig. 21 is a right side view showing a motor boat that is an example of a moving unit incorporating a motor according to a sixth embodiment of the present invention; and
Fig. 22 is a block diagram showing the configuration of a drive system of the motor boat shown in Fig. 21.

### DETAILED DESCRIPTION OF PREFERRED EMBODIMENTS

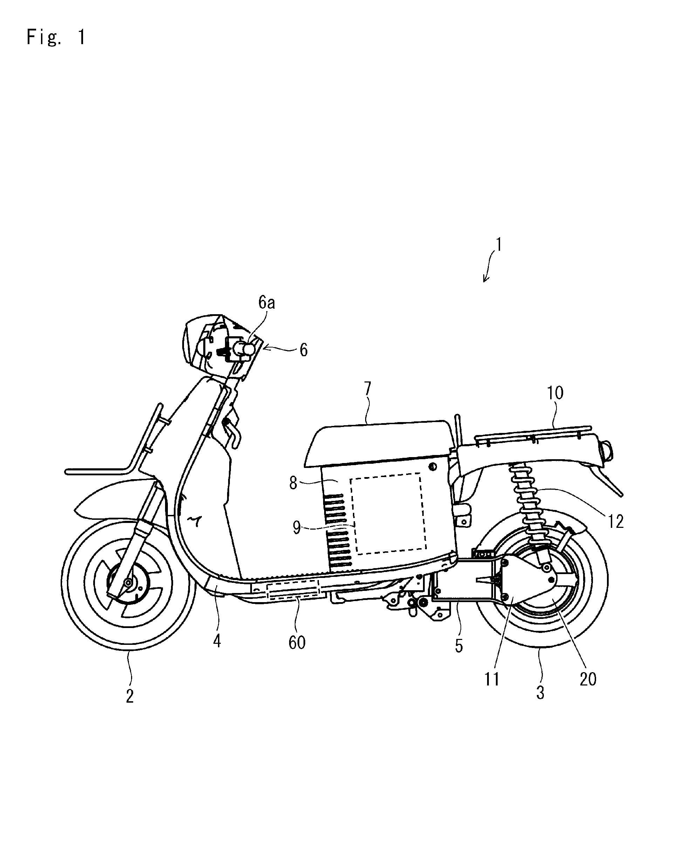

Embodiments of the present invention will be described below with reference to Figs. 1 to 22.

The structure of an electrically driven vehicle that is a moving unit incorporating a motor according to a first embodiment of the present invention will first be described with reference to Fig. 1. Fig. 1 is a right side view showing an example of the electrically driven vehicle incorporating the motor.

As shown in Fig. 1, the electrically driven vehicle 1 is a motorcycle that has a front wheel 2 and a rear wheel 3. In the electrically driven vehicle 1, a main frame 4 and a swing arm 5 are a main framework.

The front end of the main frame 4 is curved upward, and the front end supports the front wheel 2 and handlebars 6 such that the electrically driven vehicle 1 can be steered. On the rear end side of the main frame 4, and approximately in the middle of the electrically driven vehicle 1 in a frontward and rearward direction, there are provided a seat 7 on which a driver sits and a battery accommodation portion 8. The battery accommodation portion 8 is provided below the seat 7, and can accommodate a battery 9 therewithin. The seat 7 also functions as a lid of the battery accommodation portion 8; the seat 7 is attached to the battery accommodation portion 8 such that it can be opened and closed. Behind the main frame 4 and the seat 7, and above the rear wheel 3, there is provided a baggage rack 10.

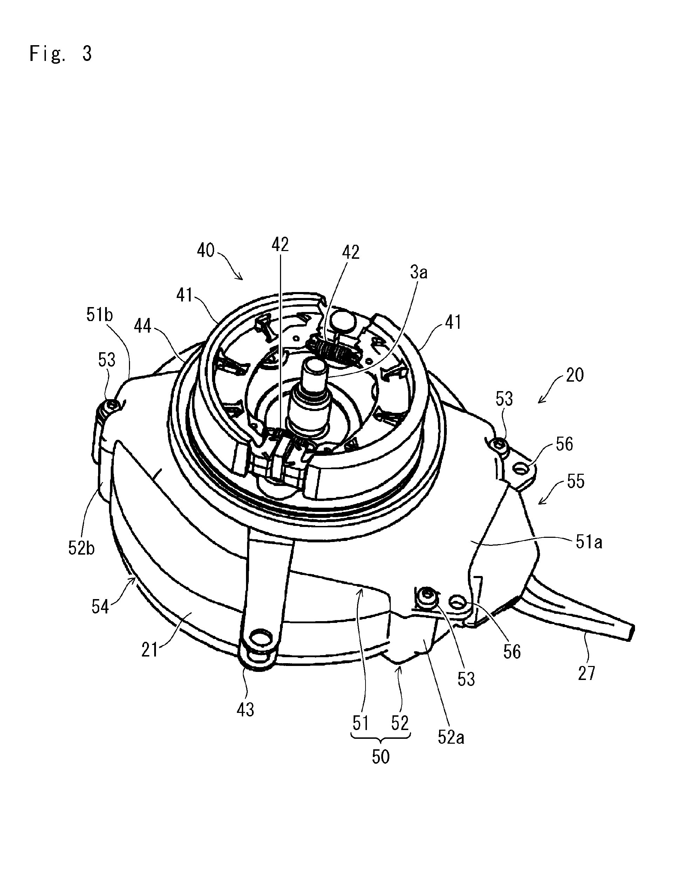

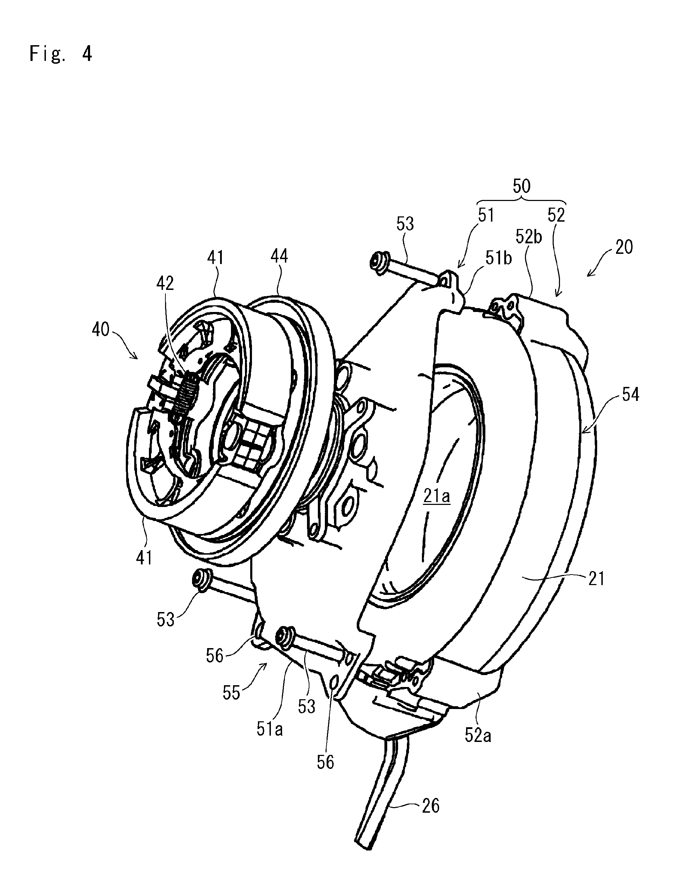

The swing arm 5 extends from the rear portion of the main frame 4, that is, an area below the seat 7 and the battery accommodation portion 8 to the rear of the electrically driven vehicle 1. The rear wheel 3 is supported by the rear end of the swing arm 5. The swing arm 5 is only provided on the right side of the rear wheel 3, and supports the rear wheel 3 by holding only one end thereof. The rear wheel 3 is a driving wheel, and a motor 20 is provided between the rear wheel 3 and the swing arm 5. The swing arm 5 is joined to a joining portion 55 (which will be described later; see Figs. 3 and 4) whose rear end is provided on the front end portion of the motor 20; the swing arm 5 is a support member that supports the rear wheel 3 through the motor 20. A suspension case 11 is provided on the right side of the motor 20. A suspension unit 12 of the rear wheel 3 extends from the suspension case 11 to the baggage rack 10, which is located thereabove.

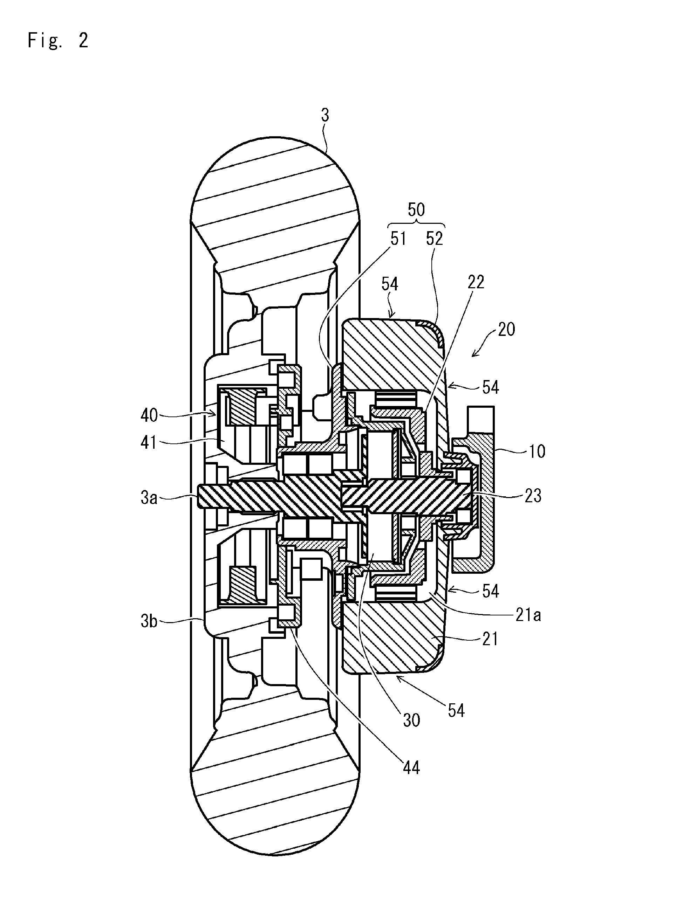

The structure of the rear wheel 3 of the electrically driven vehicle 1 will now be described with reference to not only Fig. 1 but also Figs. 2 to 4. Fig. 2 is a front vertical cross-sectional view of the rear wheel of the electrically driven vehicle; Fig. 3 is a perspective view of the vicinity of the motor shown in Fig. 2; and Fig. 4 is a partially exploded perspective view showing elements in the vicinity of the motor. In Fig. 4, a rotor within the motor and a deceleration mechanism are omitted.

As shown in Fig. 2, at and around the rear wheel 3 of the electrically driven vehicle 1, the suspension case 11, the motor 20, a deceleration mechanism 30, a brake mechanism 40 and the rear wheel 3 are sequentially provided from the right side of the rear wheel 3, that is, the right side of Fig. 2. The motor 20, the brake mechanism 40 and the rear wheel 3 are arranged coaxially with each other.

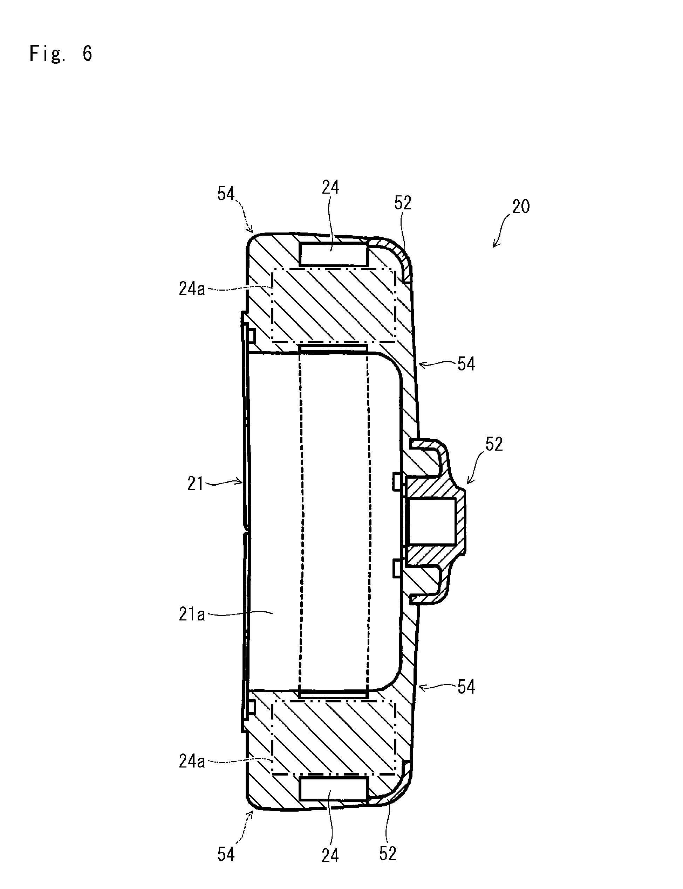

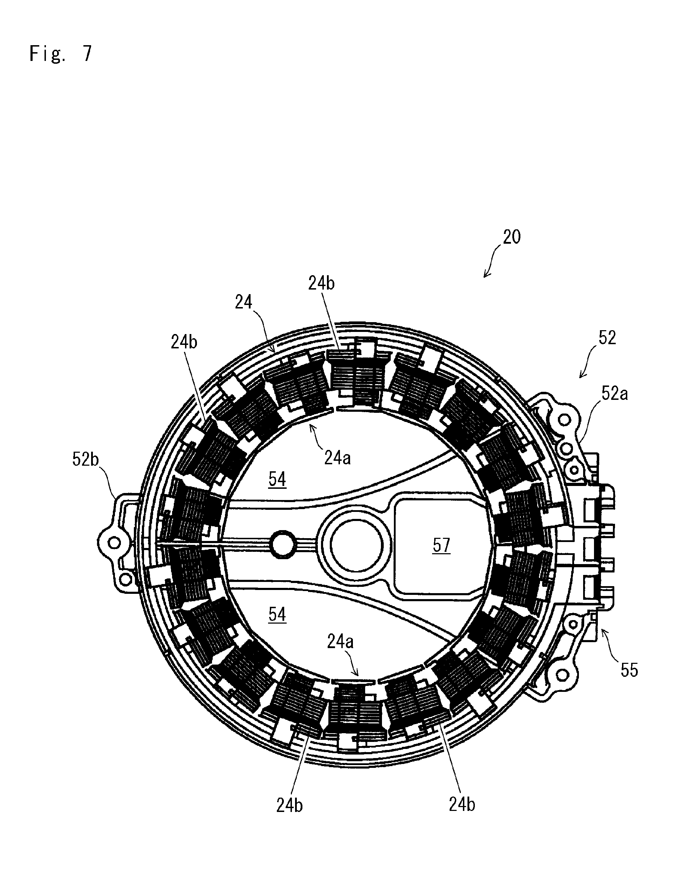

The motor 20 is a so-called three-phase brushless motor; as shown in Figs. 1, 3 and 4, the motor 20 is a molded motor, for an electrically driven vehicle, that is obtained by coating a ring-shaped stator core 24 (see Figs. 6 and 7) to be described later with an insulating molded resin 21. In the motor 20, the axis line of the stator core 24 coincides with the wheel shaft 3a of the rear wheel 3; the motor 20 is arranged close to the rear wheel 3.

As shown in Fig. 2, a rotor 22 that serves as the rotor of the motor is provided within the molded resin 21. The rotor 22 is arranged such that its axis line coincides with that of the stator core 24; the rotor 22 is fixed to a motor shaft 23 that is a rotation shaft which is rotatably provided. Hence, the driving of the motor 20 rotates the rotor 22, and its power is transmitted to the motor shaft 23.

The deceleration mechanism 30 is arranged between the motor shaft 23 and the wheel shaft 3a. The deceleration mechanism 30 is formed with, for example, a planetary gear train.

The brake mechanism 40 is a so-called drum brake that is arranged near a wheel 3b of the rear wheel 3; as shown in Figs. 3 and 4, the brake mechanism 40 is provided with a brake shoe 41, a spring 42, a brake arm 43 and a brake cover 44. The brake shoe 41 is arranged within the wheel 3b. When the brake mechanism 40 is not used, the brake shoe 41 is separated from the wheel 3b by the action of the spring 42 inwardly in a radial direction. The brake shoe 41 is extended by the rotation of the brake arm 43 against the elastic force of the spring 42 outwardly in the radial direction with respect to the wheel shaft 3a. Then, the brake shoe 41 produces friction resistance with an unillustrated drum that rotates together with the wheel 3 a, and brakes the rotation of the wheel 3a, that is, the rear wheel 3.

The brake cover 44 is attached as a lid to a portion of the wheel 3b where the brake shoe 41 is arranged, and it is covered so that dust and the like are prevented from entering the inside (see Fig. 2). The brake cover 44 has not only the function of preventing dust from entering the brake mechanism 40 but also the function of holding brake members such as the brake shoe 41, the spring 42 and the brake arm 43.

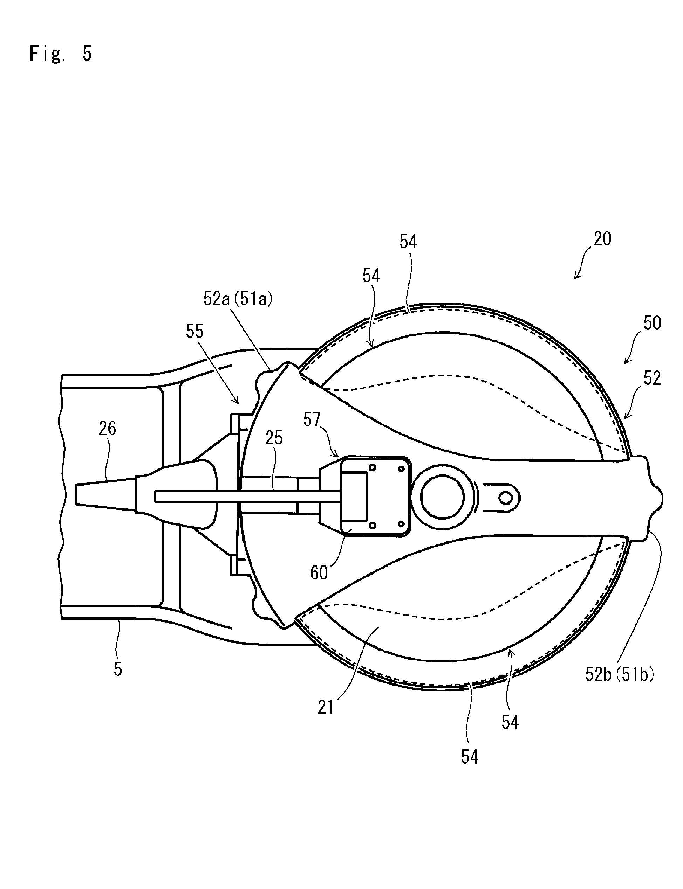

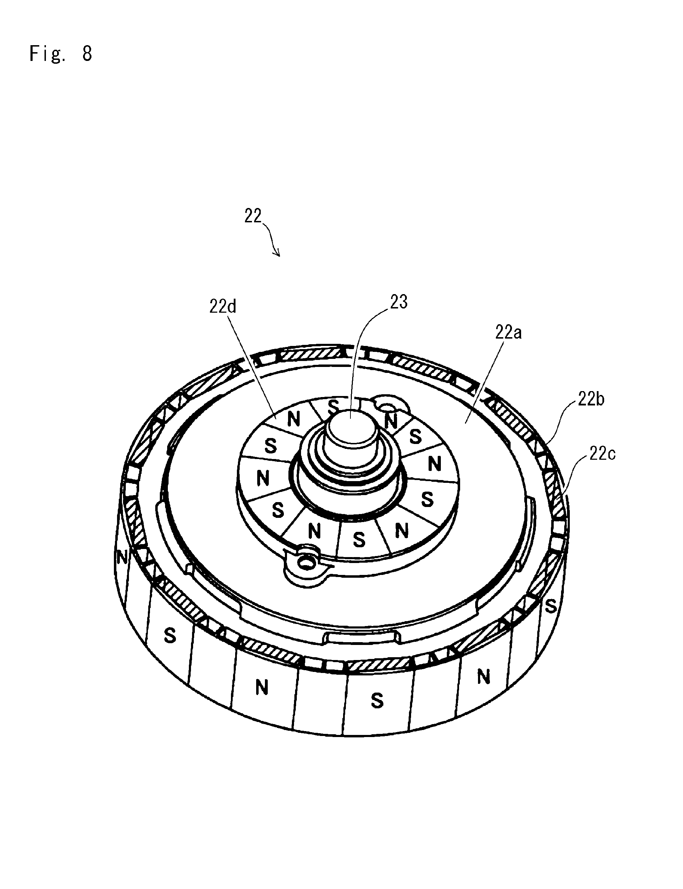

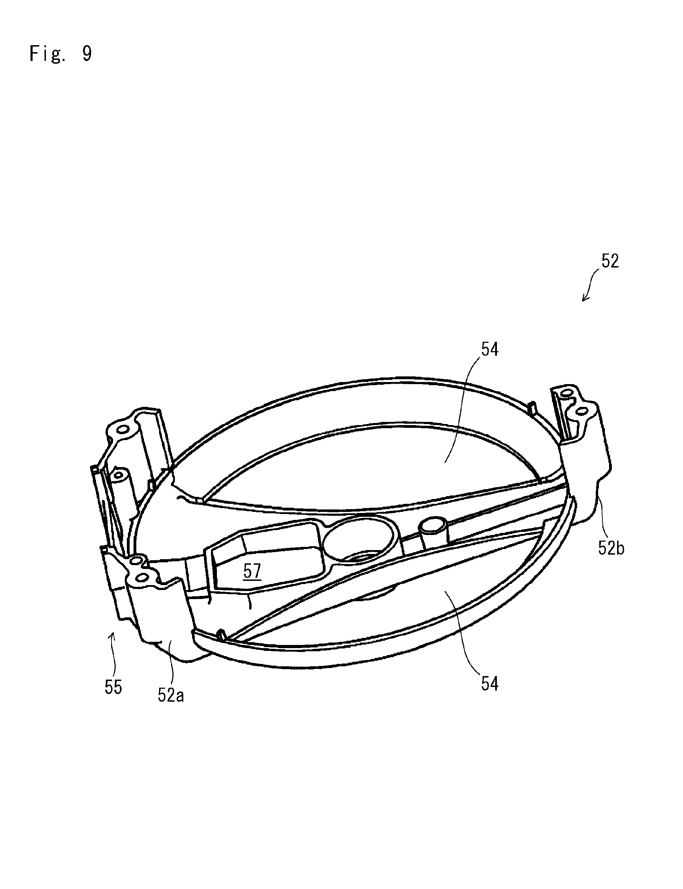

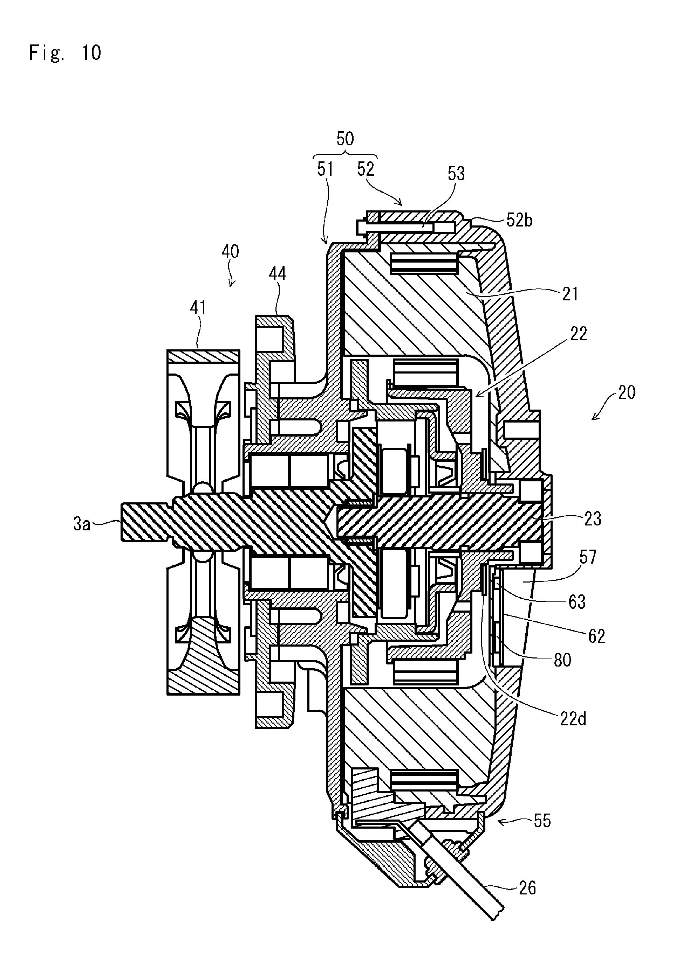

The detailed configuration of the motor 20 will now be described with reference to not only Figs. 2 to 4 but also Figs. 5 to 10. Fig. 5 is a right side view of the motor; Fig. 6 is a front vertical cross-sectional view of the molded resin of the motor; Fig. 7 is a left side view of the motor that shows a state where the stator core is incorporated in a motor case; Fig. 8 is a perspective view of the rotor; Fig. 9 is a perspective view of an outside case of the motor; and Fig. 10 is a top horizontal cross-sectional view of the motor and the brake mechanism.

The motor 20 is provided with not only the molded resin 21, the rotor 22 and the motor shaft 23, which are described previously, but also the stator core 24, the motor case 50, a position detection board 62, a signal line 25 and a power line 26.

As shown in Figs. 6 and 7, the stator core 24 is ring-shaped, and a coil portion 24a is arranged inwardly of the stator core 24 in the radial direction. A plurality of coils 24b are provided in the coil portion 24a. The coils 24b protrude inwardly of the stator core 24 in the radial direction, and are arranged in a circle along the circumferential direction. The stator core 24 including the coil portion 24a on its circumference is coated with the insulating molded resin 21. The molded resin 21 is formed of thermosetting resin containing, for example, glass fiber.

A recess portion 21a recessed with respect to the molded resin 21 from the side of the rear wheel 3 is formed inwardly of the coil portion 24a of the stator core 24 in the radial direction. The recess portion 21a is cylindrical, and the rotor 22 is arranged within the recess portion 21a (see Fig. 2).

As shown in Fig. 8, the rotor 22 is provided with a rotor holder 22a, a rotor core 22b, rotor magnets 22c and position detection magnets 22d.

The rotor holder 22a is substantially disk-shaped and is arranged outwardly of the motor shaft 23 in the radial direction. The rotor holder 22a is fixed to the motor shaft 23, and supports the rotor core 22b. The rotor core 22b is arranged outwardly of the rotor holder 22a in the radial direction, and supports the rotor magnets 22c in the vicinity of its outer circumferential surface.

A plurality of rotor magnets 22c are arranged in the outer circumferential surface of the rotor core 22b along the circumferential direction. The rotor magnet 22c with its south pole pointing outwardly in the radial direction and the rotor magnet 22c with its north pole pointing outwardly in the radial direction are alternately arranged. The number of rotor magnets 22c of the rotor 22, that is, the number of poles is, for example, 12; the number of pole pairs is 6.

In Fig. 8, a plurality of position detection magnets 22d are arranged on the upper surface of the rotor holder 22a so as to surround the motor shaft 23 in a circumferential direction along the immediately outside of the motor shaft 23 in the radial direction. In Fig. 8, the position detection magnet 22d with its south pole pointing upwardly and the position detection magnet 22d with its north pole pointing upwardly are alternately arranged. Angles at which the south poles and the north poles of the position detection magnets 22d are arranged are set to correspond to the rotor magnets 22c arranged outwardly in the radial direction. Therefore, the position of the position detection magnets 22d is detected, and thus it is possible to find the position of the rotor magnets 22c.

The motor case 50 is formed of metal such as an aluminum alloy, and is provided to include and hold the molded resin 21. The motor case 50 is composed of two plate-shaped case members that are arranged to sandwich the molded resin 21, namely, an inside case 51 shown in Fig. 4 and an outside case 52 shown in Fig. 9. As shown in Fig. 2, the inside case 51 is arranged on the side of the rear wheel 3, and the outside case 52 is arranged on the side of the suspension case 11, which is the side opposite that of the rear wheel 3.

As shown in Figs. 3 and 4, the inside case 51 has tongue-shaped front side coupling portion 51a and rear side coupling portion 51b at its ends, and the outside case 52 has tongue-shaped front side coupling portion 52a and rear side coupling portion 52b at its ends. The front side coupling portion 51a and the front side coupling portion 52a are arranged on the front side of the motor 20; the rear side coupling portion 51b and the rear side coupling portion 52b are arranged on the rear side of the motor 20. As shown in Figs. 3 and 4, the ends of the inside case 51 and the outside case 52 are coupled together by the corresponding coupling portions, that is, by the front side coupling portion 51a and the front side coupling portion 52a and by the rear side coupling portion 51b and the rear side coupling portion 52b. The inside case 51 and the outside case 52 sandwich the molded resin 21, and are joined by three bolts 53. In the motor case 50, the molded resin 21 is locally exposed to the outside at four openings 54 other than these coupling portions.

As shown in Figs. 3 to 5, the motor case 50 is provided with the joining portion 55 at its front end portion. In the joining portion 55, two screw holes 56 (see Figs. 3 and 4) for screwing with bolts and female screw portions are provided. As shown in Fig. 5, the rear portion of the swing arm 5 is screwed to the joining portion 55, and the swing arm 5 supports the entire motor 20. With respect to the three bolts 53 for coupling the inside case 51 and the outside case 52 described previously, the front side coupling portion 51a and the front side coupling portion 52a, which are longer in the circumferential direction, are provided with two bolts at both ends thereof in the circumferential direction; the rear side coupling portion 51b and the rear side coupling portion 52b, which are shorter in the circumferential direction, are provided with one bolt at the rear end portion (see Figs. 3 and 4).

On the other hand, as shown in Fig. 5, on the side opposite that of the rear wheel 3 of the motor 20, that is, on the outside, a board accommodation portion 57 is provided in the surface of the outside case 52. The board accommodation portion 57 is arranged in a region of the front portion of the outside case 52, and is formed as an opening that penetrates from the inside to the outside such that the molded resin 21 is exposed. (see Fig. 9). The position detection board 62 is accommodated in the board accommodation portion 57.

The signal line 25 through which to receive a control signal is connected to the position detection board 62. The power line 26 through which to supply electric power to the motor 20 is connected between the two screw holes 56 of the joining portion 55 of the motor case 50. The signal line 25 and the power line 26 extend outwardly of the motor 20 in the radial direction from the joining portion 55, that is, extend frontwardly along the swing arm 5.

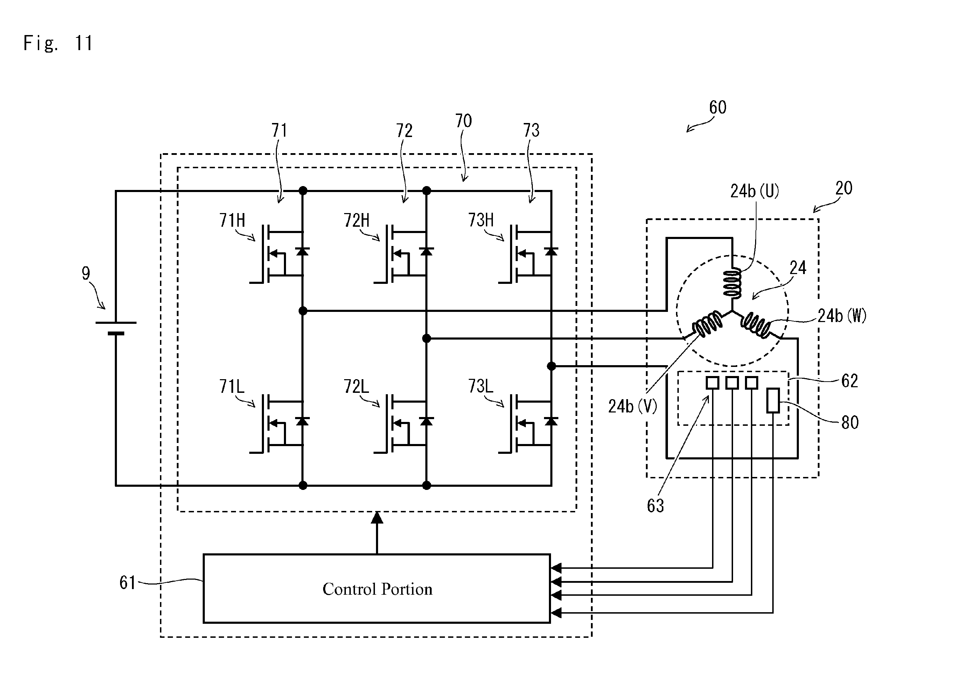

The configuration of the motor 20 and its control device will now be described with reference to not only Fig. 1 and Figs. 6 to 8 but also Fig. 11. Fig. 11 is a schematic diagram showing the configuration of the motor 20 and the control device.

The motor 20 is a three-phase brushless motor as described previously, and is provided with: the rotor 22 (not shown in Fig. 11), which is a rotor; and the stator core 24, which is a stator (see Fig. 11). The rotor 22 is provided with the rotor magnets 22c (see Fig. 8), and the stator core 24 is provided with a U-phase coil 24b(U), a V-phase coil 24b(V) and a W-phase coil 24b(W). The individual coils constitute a three-phase AC electromagnet, and attract the rotor magnets 22c to generate a driving torque for the rotor 22.

The electrically driven vehicle 1 has the control device 60 to control the operation of the motor 20. The control device 60 is provided with a control portion 61, an inverter circuit 70 and a position detection board 62. Although the control device 60 is attached to the bottom of the main frame 4 as shown in Fig. 1, it can be incorporated in the battery accommodation portion 8.

The control portion 61 is formed with a common microcontroller or the like, and functions as a processor that controls, based on programs and data stored and input in the microcontroller, a series of operations for moving the electrically driven vehicle 1. When the electrically driven vehicle 1 is moved, the control portion 61 provides a control instruction to the inverter circuit 70 so as to obtain a target torque corresponding to how much a throttle 6a operated by the driver is opened, and thereby drives the motor 20. Here, the control portion 61 controls the motor 20 based on information on the position of the rotor 22 obtained from the position detection board 62 that detects the position of the rotor 22 in the rotational direction.

The inverter circuit 70 has a U-phase switching circuit 71, a V-phase switching circuit 72 and a W-phase switching circuit 73. Each of the switching circuits has a pair of switching elements that are connected in series, and they are connected in series between the positive output terminal and the negative output terminal of the battery 9.

The U-phase switching circuit 71 is composed of an upper arm side (high voltage side) switching element 71 H and a lower arm side (low voltage side) switching element 71 L. The V-phase switching circuit 72 is composed of an upper arm side (high voltage side) switching element 72H and a lower arm side (low voltage side) switching element 72L. The W-phase switching circuit 73 is composed of an upper arm side (high voltage side) switching element 73H and a lower arm side (low voltage side) switching element 73L. Although, in Fig. 11, each of the switching elements is shown as a FET (field-effect transistor), it can be replaced such as by an IGBT (insulated gate bipolar transistor).

A node between the U-phase upper arm side switching element 71H and lower arm side switching element 71L connected in series is connected to the coil 24b(U) of the motor 20. A node between the V-phase upper arm side switching element 72H and lower arm side switching element 72L connected in series is connected to the coil 24b(V) of the motor 20. A node between the W-phase upper arm side switching element 73H and lower arm side switching element 73L connected in series is connected to the coil 24b(W) of the motor 20.

The control portion 61 controls the switching operation of each of the switching elements, and the inverter circuit 70 repeatedly passes current through each of the switching elements and interrupts the current to convert direct-current power to alternating-current power. This alternating-current power is supplied to the motor 20, and thus current flows through the U-phase coil 24b(U), the V-phase coil 24b(V) and the W-phase coil 24b(W), with the result that the rotor 22 is rotatably driven.

As described above, the position detection board 62 is a circuit board that detects the position of the rotor 22 in the rotational direction when the rotor 22 is rotated, and is attached to the motor 20.

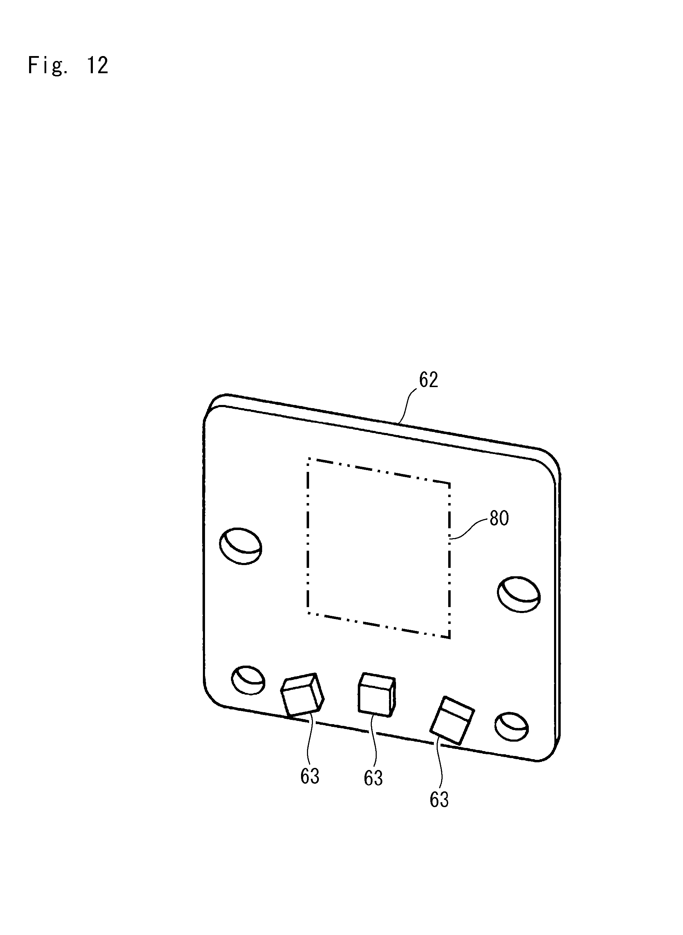

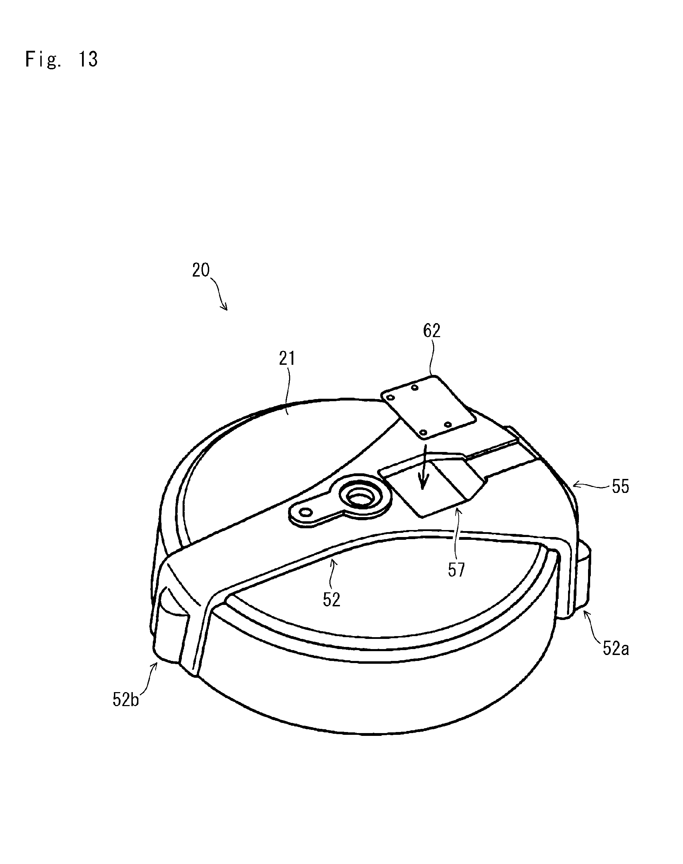

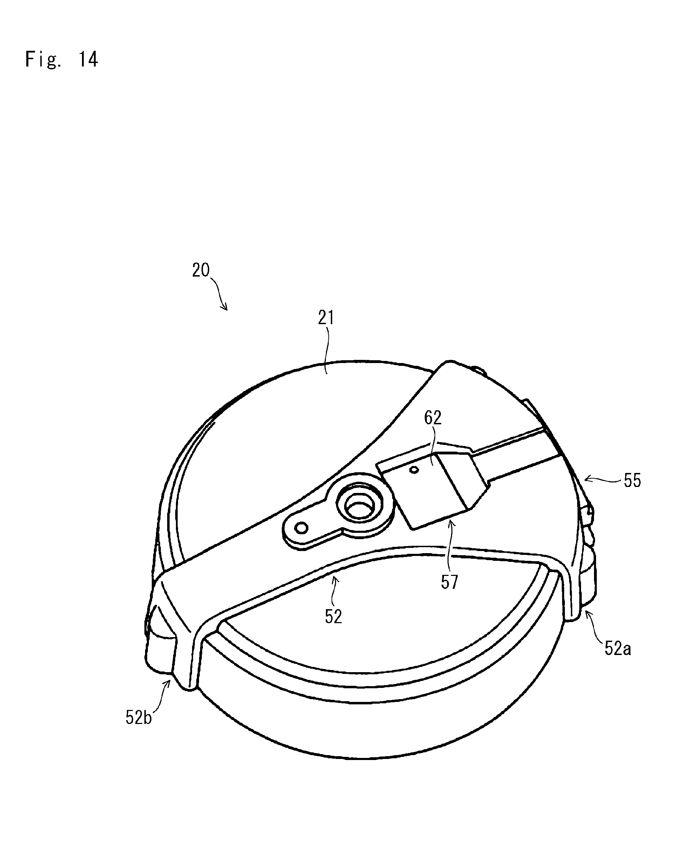

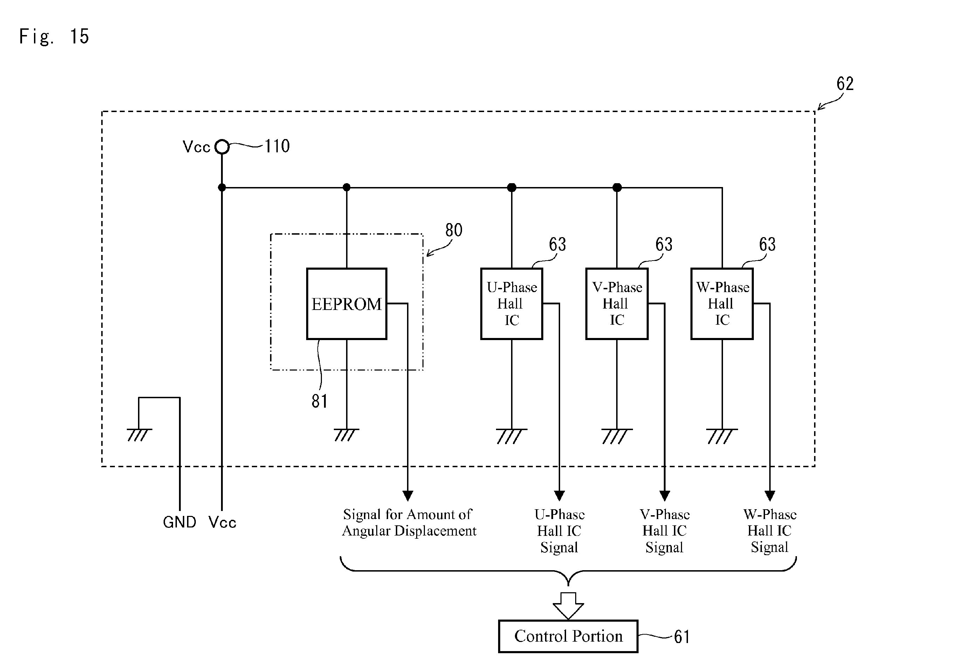

The detailed configuration of the position detection board 62 will now be described with reference to not only Figs. 10 and 11 but also Figs. 12 to 15. Fig. 12 is a perspective view of the position detection board; Fig. 13 is a perspective view illustrating the attachment of the position detection board; Fig. 14 is a perspective view showing the arrangement of the position detection board; and Fig. 15 is a circuit diagram of the position detection board.

As shown in Fig. 10, the position detection board 62 is accommodated in the board accommodation portion 57 of the motor case 52. As shown in Figs. 11 and 12, the position detection board 62 has three position detection elements 63 corresponding to three phases (U phase, V phase and W phase) on its surface. The position detection board 62 is attached to the right side surface of the molded resin 21 such that the position detection elements 63 are close to the recess portion 21a of the molded resin (see Figs. 10, 13 and 14). The position detection board 62 is attached to the motor case 52 with an unillustrated screw, and a ground circuit pattern is provided in a contact area between the position detection board 62 and the screw. In part of the molded resin 21 that corresponds to the board accommodation portion 57, its thickness is relatively small.

The position detection element 63 is formed with, for example, a Hall element; the position detection elements 63 are arranged on the position detection board 62 such that, when the position detection board 62 is fixed to the molded resin 21, the position detection elements 63 are close to the position detection magnets 22d within the recess portion 21 a through the molded resin 21 (see Fig. 10). Hence, the position detection elements 63 are affected by a magnetic field generated by the position detection magnets 22d and thereby output a voltage signal, and thus it is possible to detect the position of the rotor 22 that is rotated. The position detection elements 63 detect the position detection magnets 22d of the three phases (U phase, V phase and W phase), and thus contribute to efficient motor control.

The position detection elements 63 are attached such that they are arranged in a predetermined position, relative to the rotor 22, where the rotational position of the rotor 22 can be properly detected. However, for example, when the position detection elements 63 are mounted on the position detection board 62, when the position detection board 62 is fixed to the molded resin 21 in the board accommodation portion 57 or when a peripheral member such as the rotor 22 or the rotor magnet 22c is assembled, the position detection elements 63 may be mechanically displaced, that is, an error on the position of the attachment may be produced.

Hence, as shown in Figs. 11, 12 and 15, the position detection board 62 is provided with a storage portion 80 that stores information indicating an error of the position where the position detection element 63 is attached that is inherent motor information which can be output to the outside of the motor 20. The inherent motor information that is stored in the storage portion 80 and that can be output to the outside of the motor 20 is not limited to the error information on the position where the position detection element 63 is attached; the inherent motor information may be information that shows the type, the type number, the model number, the lot number or the serial number of the motor 20. The storage portion 80 preferably includes a requisite minimum number of elements that control the storage; other elements or the like that read information from such elements may or may not be included. When these other elements are not included in the storage portion 80, these other elements can be included in the control portion 61.

The storage portion 80 is a storage element, and is formed with, for example, an EEPROM (electrically erasable and programmable read only memory) 81. Since both the position detection elements 63 and the storage portion 80 are incorporated in the position detection board 62, which is one circuit board, it is possible to reduce the cost and size of the motor 20.

The error information on the position where the position detection element 63 is attached can be set as, for example, the amount of angular displacement. The amount of angular displacement is generally expressed by two angles, namely, an electrical angle and a mechanical angle; the electrical angle is obtained by multiplying the mechanical angle by the number of pole pairs of the rotor 22, which is a rotor. Specifically, since the number of pole pairs of the rotor 22 is six in the present embodiment, when the mechanical angle is displaced by one degree, the electrical angle is displaced by six degrees.

The detection of the amount of angular displacement as the error information on the position where the position detection element 63 is attached can be generally achieved by measuring both the output signal of the position detection element 63 and the inductive voltage of the motor 20 and then observing the displacement therebetween with an oscilloscope or the like.

One way to correct the error information on the position where the position detection element 63 is attached is to attach the position detection board 62 to the motor 20 while the displacement of an angle is being measured in real time. Disadvantageously, however, it is difficult to perform the attachment with a predetermined amount of accuracy by this method, and furthermore, this method requires a larger number of steps in the production. Therefore, in the motor 20 of the embodiment of the present invention, the position detection board 62 is fixed to the molded resin 21, and then the amount of angular displacement that is information indicating an error of the position where the position detection element 63 is attached is measured and the result is previously stored in the EEPROM 81. The EEPROM 81 outputs, as necessary, the amount of angular displacement of the position detection element 63 to the control portion 61 of the motor 20, and the amount of angular displacement is corrected with software.

For example, in the present embodiment, the amount of angular displacement of the position detection element 63 falls within a range of minus eight degrees to plus eight degrees (electrical angle) without fail. When a permissible value for the amount of angular displacement is set at plus/minus one degree, if selection from information on total eight angles can be performed and the selected information can be stored, the correction can be made.

In the configuration described above, a storage element such as an EEPROM that is relatively easily available is used, and a more accurate amount of angular displacement of the position detection elements 63 that is inherent motor information which can be output to the outside of the motor 20 is stored in the storage portion 80 of the motor 20. It is therefore unnecessary to store the amount of angular displacement in the control device 60 of the motor 20. Thus, it is possible to prevent the inconvenience of newly storing the amount of angular displacement of the position detection elements 63 of the motor 20 even when the combination of the motor 20 and its control device 60 is cancelled such as by replacement of the motor 20 or the control device 60. Consequently, it is possible to provide the motor 20 that increases the efficiency of assembly of the electrically driven vehicle 1 incorporating the motor 20.

By incorporating such a motor 20 into the electrically driven vehicle 1, it is possible to provide the electrically driven vehicle 1 that increases the efficiency of assembly in the production, repair and the like. It is also possible to provide a method of storing the error information on the position where the position detection element 63 of the rotor 22 that increases the efficiency of assembly in this way is attached.

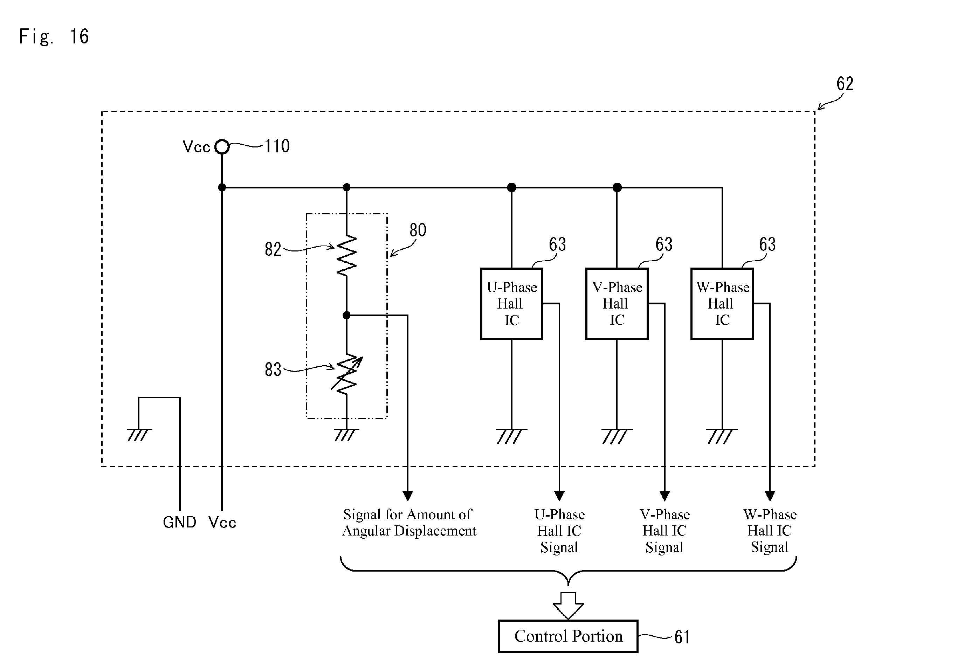

The detailed configuration of a motor according to a second embodiment of the present invention will now be described with reference to Fig. 16. Fig. 16 is a circuit diagram of the position detection board of the motor. Since the basic configuration of the present embodiment is the same as in the first embodiment described with reference to Figs. 1 to 15, the same parts of the configuration as in the first embodiment are not included in the drawing, and their description will not be repeated.

In the motor 20 of the second embodiment, the position detection board 62 is provided with a storage portion 80 shown in the circuit diagram of Fig. 16. The storage portion 80 has a resistor 82 and a variable resistor 83. These two resistors are connected to a power supply (Vcc) 110 such that the resistor 82 and the variable resistor 83 form a series circuit in this order. The storage portion 80 outputs, as necessary, a voltage between the two resistors to the control portion 61 of the motor 20 as a signal for the amount of angular displacement that is error information on the position where the position detection element 63 is attached.

The amount of angular displacement of the position detection element 63 is set by previously adjusting the voltage between the two resistors through change of the electrical resistance of the variable resistor 83. The storage portion 80 of the present embodiment is provided on the surface (the surface opposite the surface where the position detection elements 63 are arranged; see Fig. 10) of the position detection board 62 on the motor surface side so that the electrical resistance of the variable resistor 83 can be easily changed. Since the voltage between the two resistors is output as an analog signal, it is necessary to perform A/D conversion on the side of the control portion 61.

With the configuration described above, which is relatively inexpensive, it is possible to store, in the storage portion 80 of the motor 20, the amount of replacement of an angle of the position detection element 63 (the error information on the position of the attachment) that is inherent motor information which can be output to the outside of the motor 20. It is possible to easily set the amount of replacement of an angle of the position detection element 63 by adjusting the variable resistor 83.

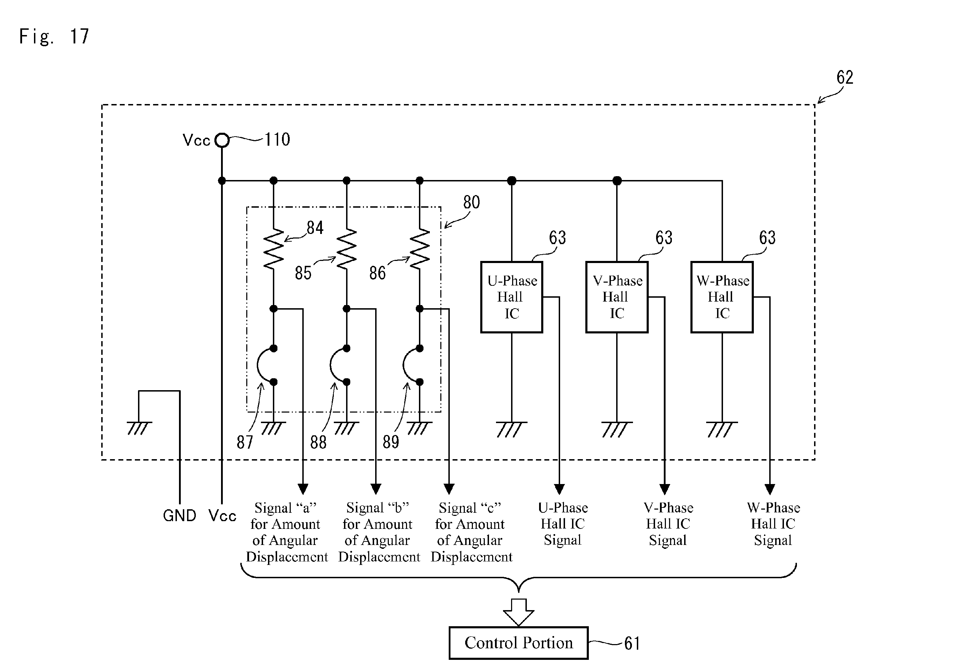

The detailed configuration of a motor according to a third embodiment of the present invention will now be described with reference to Fig. 17. Fig. 17 is a circuit diagram of the position detection board of the motor. Since the basic configuration of the present embodiment is the same as in the first embodiment described with reference to Figs. 1 to 15, the same parts of the configuration as in the first embodiment are not included in the drawing, and their description will not be repeated.

In the motor 20 of the third embodiment, the position detection board 62 is provided with a storage portion 80 shown in the circuit diagram of Fig. 17. The storage portion 80 has resistors 84 to 86 and jumper wires 87 to 89 that can be cut. In these three pairs of resistors and jumper wires, the resistor 84 and the jumper wire 87 form a series circuit, the resistor 85 and the jumper wire 88 form a series circuit and the resistor 86 and the jumper wire 89 form a series circuit. These three series circuits are connected in parallel to the power supply (Vcc) 110 such that the resistor and the jumper wire are arranged in this order. The storage portion 80 outputs, as necessary, voltages between the resistors and the jumper wires at the three points to the control portion 61 of the motor 20 as a signal for the amount of angular displacement that is error information on the position where the position detection element 63 is attached.

The amount of angular displacement of the position detection element 63 is set by previously adjusting the voltages between the resistors and the jumper wires at the three points through selection of whether to cut the jumper wires 87 to 89. The storage portion 80 of the present embodiment is provided on the surface (the surface opposite the surface where the position detection elements 63 are arranged; see Fig. 10) of the position detection board 62 on the motor surface side so that the jumper wires can be easily cut. When the jumper wires 87 to 89 are cut, the voltage of the power supply (Vcc) 110 is output as a voltage signal whereas when the jumper wires 87 to 89 are not cut, a voltage of 0 volts is output as a voltage signal. As shown in the circuit diagram of Fig. 17, the series circuits composed of the resistors and the jumper wires are provided at the three points, and thus it is possible to output, as a 3-bit digital signal, the amount of angular displacement of the position detection elements 63.

With the configuration described above, which is more inexpensive than the configuration where a semiconductor memory and a variable resistor, for example, are used, it is possible to store, in the storage portion 80 of the motor 20, the amount of replacement of an angle of the position detection element 63 (the error information on the position of the attachment) that is inherent motor information which can be output to the outside of the motor 20.

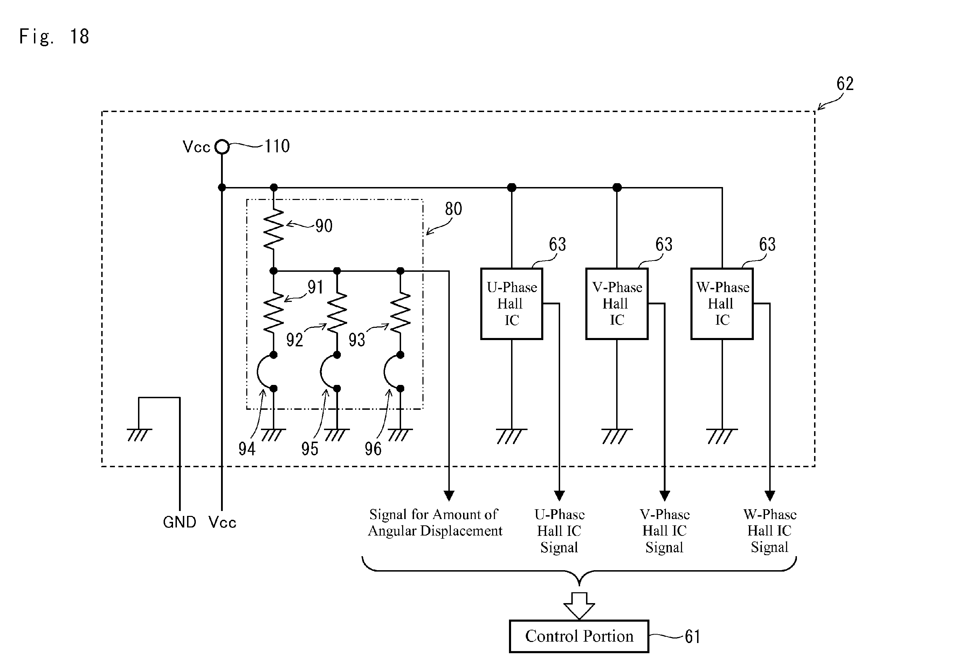

The detailed configuration of a motor according to a fourth embodiment of the present invention will now be described with reference to Fig. 18. Fig. 18 is a circuit diagram of the position detection board of the motor. Since the basic configuration of the present embodiment is the same as in the first embodiment described with reference to Figs. 1 to 15, the same parts of the configuration as in the first embodiment are not included in the drawing, and their description will not be repeated.

In the motor 20 of the fourth embodiment, the position detection board 62 is provided with a storage portion 80 shown in the circuit diagram of Fig. 18. The storage portion 80 has a main resistor 90, sub-resistors 91 to 93 and jumper wires 94 to 96 that can be cut. In these three pairs of sub-resistors and jumper wires, the sub-resistor 91 and the jumper wire 94 form a series circuit, the sub-resistor 92 and the jumper wire 95 form a series circuit and the sub-resistor 93 and the jumper wire 96 form a series circuit. These three series circuits are connected in parallel with respect to the main resistor 90 connected to the power supply (Vcc) 110 such that the sub-resistor and the jumper wire are arranged in this order. The storage portion 80 outputs, as necessary, a voltage of the main resistor 90 on the side of the sub-resistor to the control portion 61 of the motor 20 as a signal for the amount of angular displacement that is error information on the position where the position detection element 63 is attached.

The amount of angular displacement of the position detection element 63 is set by previously adjusting the voltage of the main resistor 90 on the side of the sub-resistor through selection of whether to cut the jumper wires 94 to 96. The storage portion 80 of the present embodiment is provided on the surface (the surface opposite the surface where the position detection elements 63 are arranged; see Fig. 10) of the position detection board 62 on the motor surface side so that the jumper wires can be easily cut. When the jumper wires 94 to 96 are all cut, the voltage of the power supply (Vcc) 110 is output as a voltage signal whereas when one of jumper wires 94 to 96 is not cut or no jumper wires 94 to 96 are cut, a divided voltage corresponding to the combined resistance of the sub-resistors 91 to 93 with respect to the main resistor 90 is output as a voltage signal. Since the voltage of the main resistor 90 on the side of the sub-resistor is output as an analog signal, it is necessary to perform A/D conversion on the side of the control portion 61.

With the configuration described above, in which a semiconductor memory and a variable resistor are not used and a signal line for outputting the amount of replacement of an angle (the error information on the position of the attachment) is further eliminated and which is much more inexpensive, it is possible to store, in the storage portion 80 of the motor 20, the amount of replacement of an angle of the position detection element 63 that is inherent motor information which can be output to the outside of the motor 20.

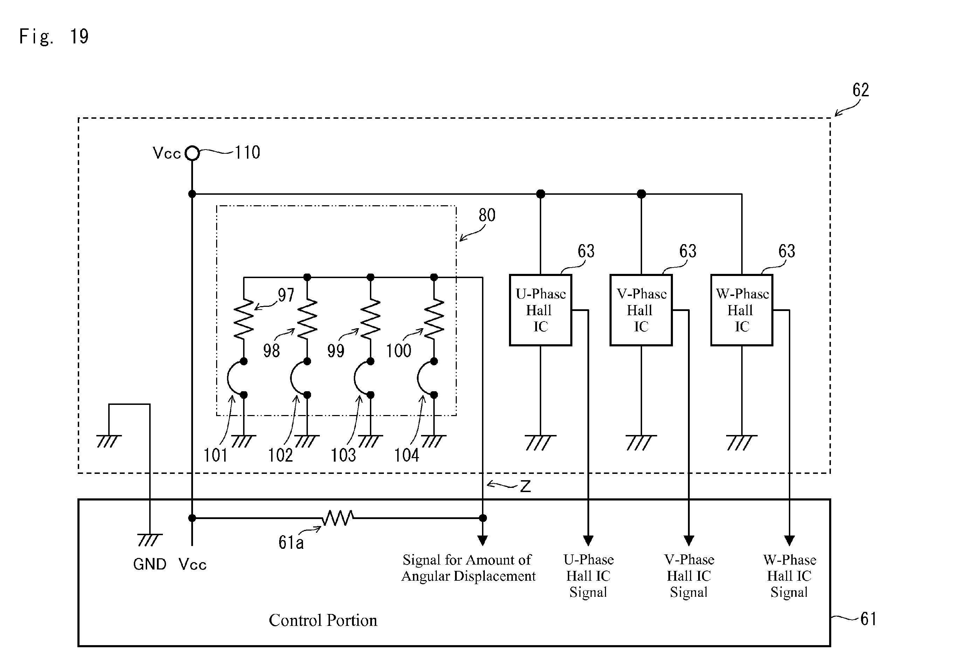

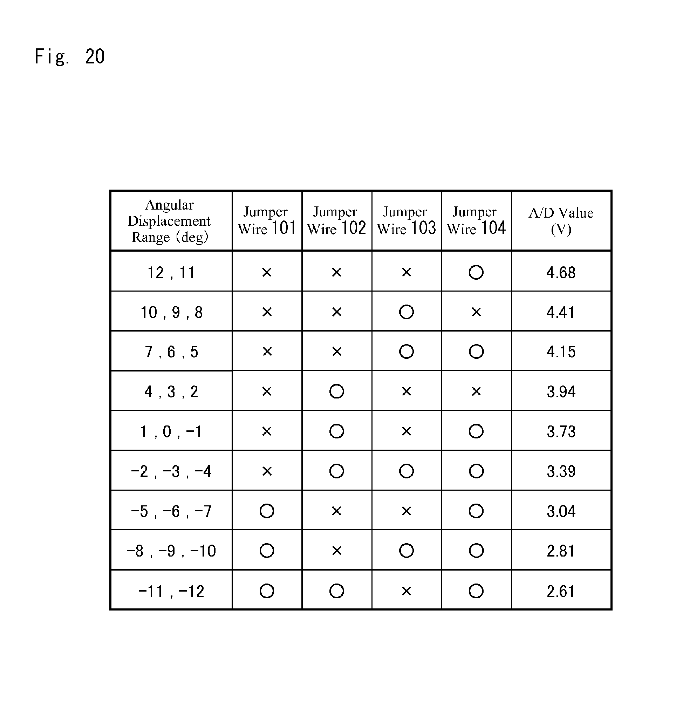

The detailed configuration of a motor according to a fifth embodiment of the present invention will now be described with reference to Figs. 19 and 20. Fig. 19 is a circuit diagram of the position detection board of the motor; Fig. 20 is a table showing a relationship between the amount of replacement of an angle in the position detection board and the setting of the jumper wires. Since the basic configuration of the present embodiment is the same as in the first embodiment described with reference to Figs. 1 to 15, the same parts of the configuration as in the first embodiment are not included in the drawings, and their description will not be repeated.

In the motor 20 of the fifth embodiment, the position detection board 62 is provided with a storage portion 80 shown in the circuit diagram of Fig. 19. The storage portion 80 has resistors 97 to 100 and jumper wires 101 to 104 that can be cut. In these four pairs of resistors and jumper wires, the resistor 97 and the jumper wire 101 form a series circuit, the resistor 98 and the jumper wire 102 form a series circuit, the resistor 99 and the jumper wire 103 form a series circuit and the resistor 100 and the jumper wire 104 form a series circuit. These four series circuits are connected in parallel with respect to a resistor 61a included in the control portion 61 and connected to the power supply (Vcc) 110 such that the resistor and the jumper wire are arranged in this order. These four series circuits are connected to an electrical wire different from electrical wires for supplying power to the position detection elements 63. The storage portion 80 outputs, as necessary, a voltage of the series circuits on the side of the power supply (Vcc) 110 to the control portion 61 of the motor 20 as a signal for the amount of angular displacement that is error information on the position where the position detection element 63 is attached.

As long as the storage portion 80 includes, as in the present embodiment, the jumper wires 101 to 104 that are requisite minimum elements for controlling the storage, it is not necessary to include the resistor 61a that is an element for reading, as information, combinations of the open and the short circuit of the jumper wires 101 to 104.

The amount of angular displacement of the position detection element 63 is set by previously adjusting the voltage of the series circuits composed of the resistors 97 to 100 and the jumper wires 101 to 104 on the side of the power supply through selection of whether to cut the jumper wires 101 to 104. The storage portion 80 of the present embodiment is provided on the surface (the surface opposite the surface where the position detection elements 63 are arranged; see Fig. 10) of the position detection board 62 on the motor surface side so that the jumper wires can be easily cut. When the jumper wires 101 to 104 are all cut, the voltage of the power supply (Vcc) 110 is output as a voltage signal whereas when one of jumper wires 101 to 104 is not cut or no jumper wires 101 to 104 are cut, a divided voltage corresponding to the combined resistance of the resistors 97 to 100 with respect to the resistor 61a provided in the control portion 61 is output as a voltage signal. Since the voltage of the series circuits on the side of the power supply is output as an analog signal, it is necessary to perform A/D conversion on the side of the control portion 61.

With respect to the storage portion 80 configured as described above, a relationship between the amount of replacement of an angle of the position detection element 63 (the error information on the position of the attachment) in the position detection board 62 and the setting of the jumper wires is shown in Fig. 20. The amount of angular displacement of the position detection element 63 in the present embodiment falls within a range of minus twelve degrees to plus twelve degrees (electrical angle) without fail. When a permissible value for the amount of angular displacement is set at plus/minus two degrees, if selection from nine angular displacement ranges shown in Fig.20 can be performed and the selected range can be stored, the correction can be made.

In the present embodiment, the resistor 97 of the storage portion 80 is set to have a resistance about twice as large as that of the resistance 61a included in the control portion 61, the resistor 98 is set to have a resistance about twice as large as that of the resistor 97, the resistor 99 is set to have a resistance about twice as large as that of the resistor 98 and the resistor 100 is set to have a resistance about twice as large as that of the resistor 99. Hence, for example, when the resistor 61 a of the control portion 61 is set to have a resistance of 2.7 kΩ, the resistor 97 has a resistance of 4.7 kΩ, the resistor 98 has a resistance of 10 kΩ, the resistor 99 has a resistance of 20 kΩ and the resistor 100 has a resistance of 39 kΩ.

The symbol "O" in Fig. 20 represents the short-circuit state in which the jumper wire is not cut; the symbol "×" represents the open state in which the jumper wire is cut. In order for a failure in the mounting of the jumper wires at the time of production of the position detection board 62 to be distinguished, a combination where all the four jumper wires 101 to 104 are in the open state (x) is removed. In order for a failure to cut the jumper wires to be distinguished, a combination where all the four jumper wires 101 to 104 are in the short-circuit state (O) is also removed. When the four jumper wires are used, even if two combinations, that is, one where all are in the open state and the other where all are in the short-circuit state are removed, the angular displacement ranges can be stored using the remaining fourteen combinations of the open state and the short-circuit state. However, five combinations are not used and the angular displacement ranges are set to nine combinations shown in Fig. 20 so that the boundary between the adjacent angular displacement ranges can be distinguished as clearly as possible.

With the configuration described above, in which a semiconductor memory and a variable resistor are not used and which is much more inexpensive, it is possible to store, in the storage portion 80 of the motor 20, the amount of replacement of an angle of the position detection element 63 (the error information on the position of the attachment) that is inherent motor information which can be output to the outside of the motor 20. Since current flows through an electrical wire (indicated by Z in Fig. 19) through which a signal for the error information is output, when the motor 20 and the control portion 61 are separated apart and thus the electrical wire extends relatively long, it is possible to avoid being affected by noise.

With the configuration described above, it is possible to enhance the S/N ratio as compared with a case where current does not flow through an electrical wire through which a signal for the error information is output as in the fourth embodiment described with reference to Fig. 18.

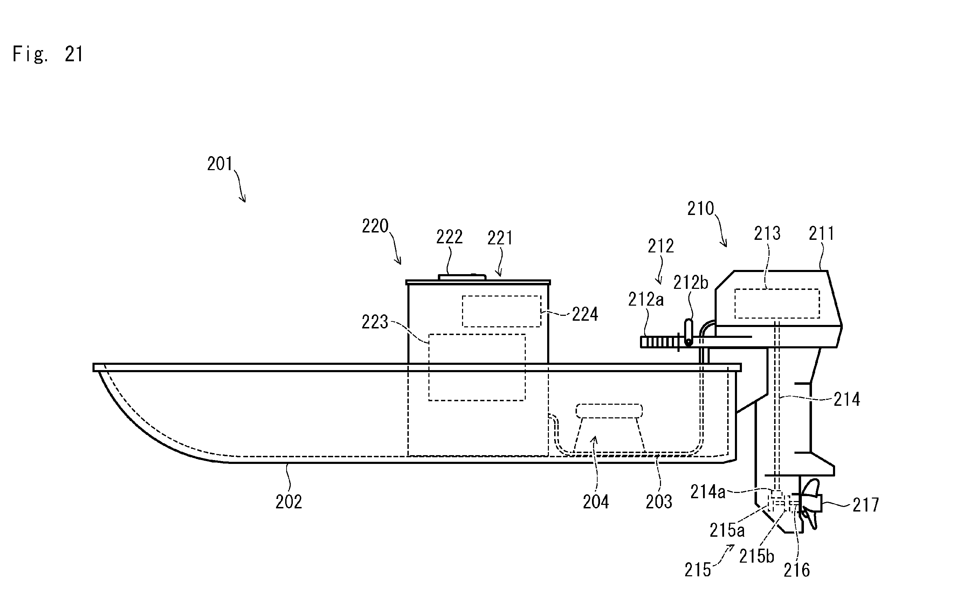

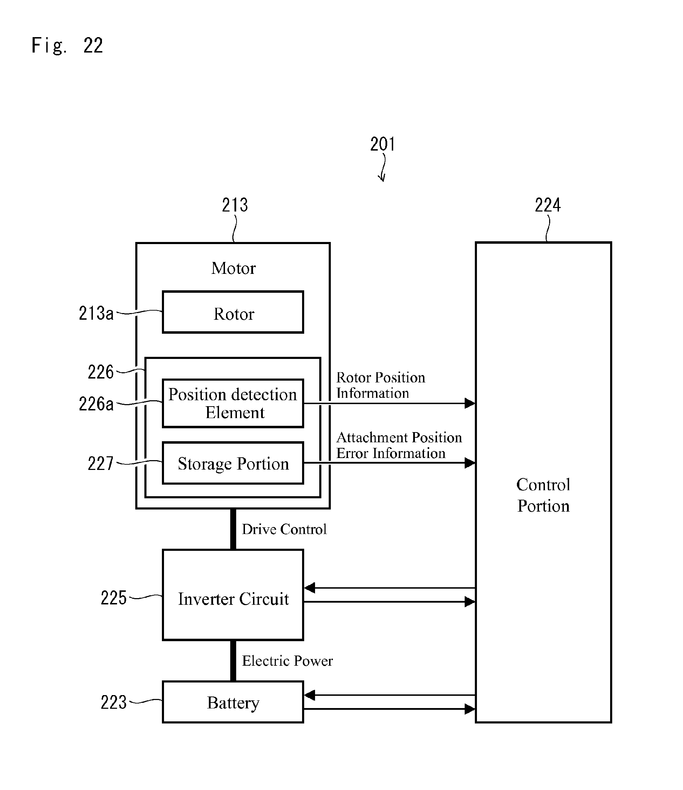

A moving unit incorporating a motor according to a sixth embodiment of the present invention will now be described with reference to Figs. 21 and 22. Fig. 21 is a right side view showing a motor boat that is an example of the moving unit incorporating the motor; Fig. 22 is a block diagram showing the configuration of a drive system of the motor boat. Since the detailed configuration of the motor and the control device in the present embodiment is the same as in the first embodiment described with reference to Figs. 1 to 15, the same parts of the configuration as in the first embodiment are not included in the drawings, and their description will not be repeated.

As shown in Figs. 21 and 22, the motor boat 201 is provided with a boat body 202, an outboard engine 210 and a control device 220. The outboard engine 210 is arranged on the after part of the boat body 202; the control device 220 is arranged substantially in the middle in the frontward and rearward direction within the boat body 202. The outboard engine 210 and the control device 220 are connected by a cable 203 composed of a power line and a signal line.

The outboard engine 210 has a steering tiller 212 on the front of its housing 211, a motor 213, a drive shaft 214, a shift device 215 and a propeller shaft 216 within the outboard engine 210 and a propeller 217 on the lower part of the outboard engine 210.

The steering tiller 212 is formed in the shape of a lever that extends frontwardly of the outboard engine 210, and the steering tiller 212 is moved sideway such that the outboard engine 210 itself can be moved sideway. The steering tiller 212 is provided with a throttle 212a that is used for accelerating the motor boat 201, and a shift lever 212b that switches between the forward movement, the neutral and the backward movement.

The motor 213 is arranged in an upper portion within the outboard engine 210, and the drive shaft 214 extends downward and substantially perpendicularly. A pinion 214a is provided on the lower end of the drive shaft 214, where the propeller shaft 216 extending substantially horizontally with respect to the shift device 215 is arranged.

As shown in Fig. 22, a position detection board 226 for detecting the position of a rotor 213a in the rotational direction when the rotor 213a is rotated is attached to the motor 213. The position detection board 226 is a circuit board on which a position detection element 226a and a storage portion 227 for storing error information on a position where the position detection element 226a is attached are provided.

The shift device 215 is provided with the propeller shaft 216 and a forward gear 215a and a backward gear 215b whose axis lines coincide with each other. The shift device 215 changes, based on the operation of the shift lever 212b, the engagement between the pinion 214a and the forward gear 215a and the engagement between the pinion 214a and the backward gear 215b, and thereby switches the rotational direction of the propeller shaft 216.

The propeller 217 is attached to the end of the propeller shaft 216, and is provided on the lower portion of the outboard engine 210 to face backward. The propeller 217 receives power from the motor 213 to move the motor boat 201 forward or backward.

The control device 220 has, in its unit case 221, an operation panel 222, a battery 223, a control portion 224, an inverter circuit 225 and the position detection board 226. The operation panel 222 is provided on the upper surface of the unit case 221; the battery 223, the control portion 224 and the inverter circuit 225 are provided within the unit case 221; and the position detection board 226 is provided in the motor 213.

The operation panel 222 is used when a setting and an instruction for the motor boat 201 are input, and when a movement speed, an operation instruction and the like are displayed. The battery 223 supplies electric power to the motor 213, the operation panel 222 and the control portion 224.

The control portion 224 is formed with a common microcontroller or the like, and the inverter circuit 225 for driving the motor 213 is provided together with the control portion 224. Based on programs and data stored and input in the control portion 224, the control portion 224 feeds to the motor 213 a drive control instruction corresponding to how much the throttle 212a is opened, and thereby drives the motor 213. Here, the control portion 224 controls the motor 213 based on information on the position of the rotor 213a obtained from the position detection board 226 that detects the position of the rotor 213a in the rotational direction and error information on the position where the position detection element 226a is attached.

A driver seat 204 on which a driver of the motor boat 201 sits is provided between the outboard engine 210 and the control device 220. The driver sitting on the driver seat 204 operates the outboard engine 210 and the control device 220.

With the configuration described above, by incorporating the motor 213 of the present invention into the motor boat 201 that is a moving unit, it is possible to provide the motor boat 201 that increases the efficiency of assembly in the production, repair and the like.

Although the embodiments of the present invention have been described above, the present invention is not limited to these embodiments, and many modifications are possible without departing from the spirit of the present invention.

For example, although, in the embodiments of the present invention, the motorcycle shown in Fig. 1 is described as an example of the electrically driven vehicle 1 that is a moving unit incorporating the motor 20, the electrically driven vehicle incorporating the motor is not limited to a motorcycle, and it may be a three-wheeled vehicle or a four-wheeled vehicle. Although, in the embodiment of the present invention, the motor boat 201 shown in Fig. 21 is described as an example of the moving unit incorporating the motor 213, the moving unit incorporating the motor 213 is not limited to a motor boat, and, as described above, it may be a vehicle such as a ship or play equipment on the water or a moving unit that moves with no humans on it.

The deceleration mechanism 30 and the brake mechanism 40 are not limited to the mechanism described in the above embodiments; for example, a disc brake may be used as the brake mechanism 40.

Although, in the above embodiments, the position detection elements 63 and the storage portion 80 are attached to the motor 20 through the position detection board 62, they can be attached directly to the motor 20. Although the storage portion 80 is also placed on the position detection board 62 where the position detection elements 63 are provided, the storage portion 80 may be provided on another circuit board and attached to the motor 20. Three position detection elements 63 for the three phases (U phase, V phase and W phase) of the motor 20 may be individually provided on separate position detection boards.

The storage element used as the storage portion 80 in the first embodiment is not limited to an EEPROM, and another semiconductor memory or the like may be used instead.

The jumper wire used in the storage portion 80 in the third, fourth and fifth embodiments may be replaced by another functional member that can open and close an electrical circuit. For example, the jumper wire can be replaced by a switch such as a dip switch.

## Claims

1. A motor comprising:
a storage portion,
wherein information stored in the storage portion can be output to an outside.

2. The motor of claim 1, further comprising:
a rotor;
a position detection element that is attached to detect a position of the rotor; and
the storage portion that stores information indicating an error of a position where the position detection element is attached.

3. The motor of claim 2, further comprising:
a position detection board on which the position detection element is provided,
wherein the storage portion is provided on the position detection board.

4. The motor of any one of claims 1 to 3,
wherein the storage portion is formed with a storage element.

5. The motor of any one of claims 1 to 3,
wherein, in the storage portion, a series circuit composed of two resistors is connected to a power supply and one of the two resistors is a variable resistor, and the storage portion outputs a voltage between the two resistors as a signal for the information.

6. The motor of any one of claims 1 to 3,
wherein, in the storage portion, a plurality of series circuits composed of resistors and jumper wires that can be cut are connected in parallel with respect to a power supply, and the storage portion outputs each of voltages between the resistors and the jumper wires as a signal for the information.

7. The motor of any one of claims 1 to 3,
wherein, in the storage portion, a plurality of series circuits composed of sub-resistors and jumper wires that can be cut are connected in parallel with respect to a main resistor connected to a power supply, and the storage portion outputs a voltage of the main resistor on a side of the sub-resistors as a signal for the information.

8. The motor of claim 1, further comprising:
a position detection element that is attached to the motor to detect a position of a rotor,
wherein, in the storage portion, a plurality of series circuits composed of resistors and jumper wires that can be cut are connected in parallel with respect to an electrical wire different from an electrical wire for supplying electric power to the position detection element, and the storage portion outputs a voltage of the series circuits on a side of a power supply as a signal for the information.

9. The motor of claim 2,
wherein, in the storage portion, a plurality of series circuits composed of resistors and jumper wires that can be cut are connected in parallel with respect to an electrical wire different from an electrical wire for supplying electric power to the position detection element, and the storage portion outputs a voltage of the series circuits on a side of a power supply as a signal for the information.

10. A moving unit comprising the motor of any one of claims 1 to 9.

11. The moving unit of claim 10, further comprising:
the motor;
a control device that controls the motor based on error information on a position where the position detection element is attached, the error information being obtained from the storage portion of the motor; and
a battery that supplies electric power to the motor and the control device.

12. A method of storing error information on a position where a rotor position detection element is attached, comprising:
fixing, to a motor, a position detection element that detects a position of a rotor;
measuring, by rotating the motor, an error of a position where the position detection element is attached; and
storing, in a storage portion included in the motor, information indicating the error of the position where the position detection element is attached.
